# EUROPEAN PATENT APPLICATION

(11) **EP 3 340 665 A1**
(43) Date of publication of application: **27.06.2018**
(21) Application number: 17210260.0
(22) Date of filing: 22.12.2017
(51) Int. Cl.: H04W 4/80, H04L 12/58, G01R 31/36

(54) **INFORMATION INQUIRY SYSTEM AND INFORMATION INQUIRY METHOD**

(30) Priority: 26.12.2016 CN 201611218164
(71) Applicant: Optimum Battery Co., Ltd., Shenzhen City, Guangdong 518118 (CN)
(72) Inventor: Ji, Yue qun, Shenzhen, Guangdong 518118 (CN)
(74) Representative: Bumke, Jakob Wenzel

(57) **Abstract**

An information inquiry system including an electric vehicle, an instant messaging (IM) background server, and a mobile communication device. The electric vehicle includes a battery management system (BMS) and a beacon device. The mobile communication device includes a Bluetooth module and an IM software. The IM background server saves information of the BMS and an identification code of the BMS. The beacon device saves the identification code and broadcasts the identification code. When it is necessary to acquire the information of the BMS, the Bluetooth module and a shake function of the IM software are activated, the IM software receives the identification code and acquires the information of the BMS from the IM background server, according to the identification code, and the information of the BMS is displayed on a page of the mobile communication device. The present invention further provides an information inquiry method.

## Description

### BACKGROUND OF THE INVENTION

### Field of the Invention

This invention relates to electric vehicles, and more particular, to an information inquiry system and an information inquiry method applied in an electric vehicle for acquiring information of a battery management system (BMS).

### Description of the Related Art

Battery packs are employed in a wide variety of electronic devices, such as electric vehicles. Generally, each electric vehicle needs a battery management system (BMS) to manage a battery pack thereof. However, the BMS is always positioned on a main control box which located at a lower portion of a vehicle body of the electric vehicle. To obtain information of the BMS, such as a version of the BMS, the vehicle body and the main control box have to be detached to allow a special device to connect to the BMS, which is cost, inconvenient, and time consuming.

It is desirable to provide an invention, which can overcome the problems and limitations mentioned above.

### SUMMARY OF THE INVENTION

The present invention is directed to an information inquiry system and an information inquiry method that substantially obviates one or more of the problems due to limitations and disadvantages of the related art.

In an aspect of the present invention, there is provided an information inquiry system comprising an electric vehicle, an instant messaging (IM) background server, and a mobile communication device. The electric vehicle comprises a battery management system (BMS) and a beacon device. The mobile communication device comprises a Bluetooth module and an IM software. The IM background server is configured to save information of the BMS and an identification code of the BMS. The beacon device is configured to save the identification code of the BMS, and broadcast the identification code through a Bluetooth IBeacon technology. When it is necessary to acquire the information of the BMS, the Bluetooth module and a shake function of the IM software are activated, the IM software receives the identification code and acquires the information of the BMS from the IM background server, according to the identification code, and the information of the BMS is displayed on a page of the mobile communication device.

In another aspect of the present invention, there is provided an information inquiry method comprising: saving information of a battery management system (BMS) and an identification code of the BMS in an instant messaging (IM) background server; setting the identification code in a beacon device; broadcasting the identification code by the beacon device through a Bluetooth IBeacon technology; activating a bluetooth module of a mobile communication device and a shake function of an IM software of the mobile communication device; receiving the identification code by the IM software, and acquiring the information of the BMS from the IM background server, according to the identification code; and displaying the information of the BMS on a page of the mobile communication device.

In another aspect of the present invention, there is provided an information inquiry system comprising: a plurality of electric vehicles, an instant messaging (IM) background server, and a mobile communication device. Each electric vehicle comprises a battery management system (BMS) and a beacon device configured to save an identification code of the BMS and broadcast the identification code through a Bluetooth IBeacon technology. The mobile communication device comprising a Bluetooth module and an IM software. The IM background server is configured to save information of each BMS and the identification code of each BMS. When it is necessary to acquire the information of the BMS of one of the electric vehicle, the Bluetooth module and a shake function of the IM software are activated, the IM software receives the identification code of the BMS of the one of the electric vehicle and acquires the information of the BMS of the one of the electric vehicle from the IM background server, according to the identification code the BMS of the one of the electric vehicle, and the information of the BMS of the one of the electric vehicle is displayed on a page of the mobile communication device.

It is to be understood that both the foregoing general description and the following detailed description are exemplary and explanatory and are intended to provide further explanations of the invention as claimed.

### BRIEF DESCRIPTION OF THE DRAWINGS

Implementations of the present technology will now be described, by way of example only, with reference to the attached drawings. It may be understood that these drawings are not necessarily drawn to scale, and in no way limit any changes in form and detail that may be made to the described embodiments by one skilled in the art without departing from the spirit and scope of the described embodiments.
FIG. 1 is a block schematic diagram of an information inquiry system provided by one embodiment of the present invention.
FIG. 2 is a flow chart of an information inquiry method provided by one embodiment of the present invention.
FIG. 3 is a block schematic diagram of an information inquiry system provided by another embodiment of the present invention.

### DETAILED DESCRIPTION OF THE PREFERRED EMBODIMENTS

In order to make the purposes, technical solutions, and advantages of the present invention be clearer, the present invention will be further described in detail hereafter with reference to the accompanying drawings and embodiments. However, it will be understood by those of ordinary skill in the art that the embodiments described herein can be practiced without these specific details. In other instances, methods, procedures and components have not been described in detail so as not to obscure the related relevant feature being described. Also, it should be understood that the embodiments described herein are only intended to illustrate but not to limit the present invention.

Several definitions that apply throughout this disclosure will be presented. The term "module", as used herein, refers to logic embodied in hardware or firmware, or to a collection of software instructions, written in a programming language, such as, Java, C, or assembly. One or more software instructions in the modules can be embedded in firmware, such as in an EPROM. The modules described herein can be implemented as either software and/or hardware modules and can be stored in any type of non-transitory computer-readable medium or other storage device. Some non-limiting examples of non-transitory computer-readable media include CDs, DVDs, BLU-RAY, flash memory, and hard disk drives. The term "coupled" is defined as connected, whether directly or indirectly through intervening components, and is not necessarily limited to physical connections. The connection can be such that the objects are permanently connected or releasably connected. The term "comprise", when utilized, means "include, but not necessarily limited to"; it specifically indicates open-ended inclusion or membership in a so-described combination, group, series and the like.

It should be noted that references to "an" or "one" embodiment in this disclosure are not necessarily to the same embodiment, and such references mean "at least one."

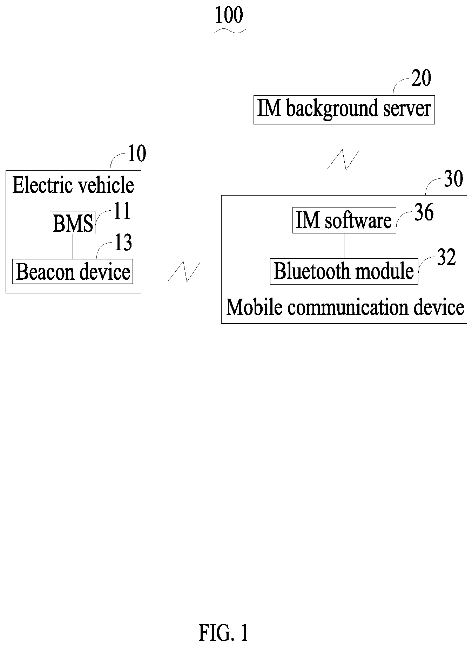

Fig. 1 illustrates a block schematic diagram of an information inquiry system 100 provided by one embodiment of the present invention. The information inquiry system 100 comprises an electric vehicle 10, an instant messaging (IM) background server 20, and a mobile communication device 30. The electric vehicle 10 comprises a battery management system (BMS) 11 and a beacon device 13. The mobile communication device 30 comprises a Bluetooth module 32 and an IM software 36. In one embodiment, the IM software 36 is Wechat software which similar to skype or facebook. The IM background server 20 is configured to save information of the BMS 11 and an identification code of the BMS 11. The identification code is set in the beacon device 13. The beacon device 13 is configured to broadcast the identification code through a Bluetooth IBeacon technology. The mobile communication device 30 is configured to activate the Bluetooth module 32 and the shake function of the IM software 36. The IM software 36 is configured to receive the identification code and acquire the information of the BMS 11 from the IM background server 20, according to the identification code. The information of the BMS 11 is displayed on a page of the mobile communication device 30.

It may be understood that, the BMS 11 is attached to a main control box which located at a lower portion of a vehicle body of the electric vehicle 10. The BMS 11 is coupled to a battery pack (not shown) of the electric vehicle 10. The battery pack comprises a plurality of rechargeable batteries (not shown) configured in series, parallel or a mixture of both to store and deliver electric energy. The BMS 11 is configured to manage the battery pack, monitor states of the battery pack.

In one embodiment, the beacon device 13 is with a function of BLE (Bluetooth Low Energy), which is the so-called Bluetooth 4.0 or Bluetooth Smart communication function. The beacon device 13 utilizes a BLE technology to transmit the identification code to the surrounding devices near the beacon device 13. That is, the beacon device 13 may be equal to a base station transmitting the identification code. The beacon device 13 is arranged near the BMS 11. The beacon device 13 may be attached to the main control box of the electric vehicle 10, or may be positioned on other locations of the vehicle body of the electric vehicle 10.

It may be understood that, the IBeacon technology indicates a device with a BLE communication function which is capable of transmitting its unique identification code to surrounding devices. Application softwares of the surrounding devices will take corresponding actions according to the identification code. The IBeacon technology is generally with the following features:
(1) Pairing-free
   Bluetooth matching connections are not required between the devices.
(2) more precise and longer transmitting distance
   The precise of the IBeacons signal is up to the millimeter level and the transmission distance of the IBeacons signal is up to 50 meters.
(3) extra low power consumption
   A common coin cell battery positioned in the beacon device 13 can be used for two years.
(4) wide application
   Devices above Bluetooth 4.0 version can be as transmitters and receivers.

The information of the BMS 11 comprises a version of the BMS 11, a hardware information of the BMS 11, a product map of the BMS 11, and a jump URL (Uniform Resource Locator) with detail product information of the BMS 11. The jump URL is also known as a web address.

The identification code comprises a vendor identification number, a product category number, and a product type number. The identification code further includes an IBeacon identification number and a transmission power identification number.

In one embodiment, a length of the vendor identification number is 16 bytes. A length of the product category number is 2 bytes. A length of the product type number is 2 bytes. A length of the IBeacon identification number is 9 bytes. A length of the transmission power identification number is 2 bytes. A length of the identification code is 32 bytes.

In one embodiment, the page is a H5 (HyperText Markup Language 5) page. In other embodiments, the page may be other pages, such as an ASP (Active Server Pages), a PHP (Hypertext Preprocessor) page, or the like.

In one embodiment, the mobile communication device 30 comprises a cell phone, a laptop computer, a tablet computer, a personal digital assistant, and a smart wearable device.

An operation principle of the information inquiry system 100 of the present invention will be described below.

The information of the BMS 11 and the identification code of the BMS 11 are saved in the IM background server 20. The identification code is set in the beacon device 13. When a cell battery is installed in the beacon device 13, the beacon device 13 broadcasts the identification code through the Bluetooth IBeacon technology. When it is necessary to acquire the information of the BMS 11, the Bluetooth module 32 of the mobile communication device 30 and the shake function of the IM software 36 of the mobile communication device 30 are activated. The IM software 36 receives the identification code and acquires the information of the BMS 11 from the IM background server 20, according to the identification code. The information of the BMS (11) is displayed on the page of the mobile communication device (30).

It may be understood that, a user can acquire the information of the BMS 11 through the mobile communication device 30 without detachment the main body of the electric vehicle 10 or open the main control box of the electric vehicle 10 to connect the special device. It can save manpower, costs and times, and it is convenient for the user.

In one embodiment, the user may click the jump URL to the corresponding webpage to view more detailed information of the BMS 11.

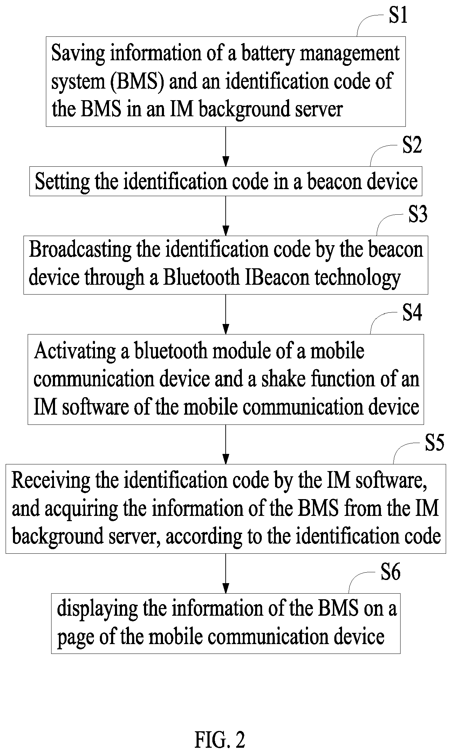

FIG. 2 illustrates a flowchart of an information inquiry method provided by one embodiment of the present invention. Each block shown in FIG.2 represents one or more processes, methods, or subroutines, carried out in the information inquiry method. Depending on the embodiment, additional blocks can be added, others removed, and the illustrated order of blocks is by example only and the order of the blocks can change. The information inquiry method can begin at block S1.

At block S1, saving information of a battery management system (BMS) 11 and an identification code of the BMS 11 in an instant messaging (IM) background server 20.

In one embodiment, the BMS 11 may be positioned on a main control box located at a lower portion of a vehicle body of the electric vehicle 10. The BMS 11 is configured to couple to a battery pack (not shown) of the electric vehicle 10. The battery pack comprises a plurality of rechargeable batteries (not shown) configured in series, parallel or a mixture of both to store and deliver electric energy. The BMS 11 is configured to manage the battery pack, monitor states of the battery pack.

The information of the BMS 11 comprises a version of the BMS 11, a hardware information of the BMS 11, a product map of the BMS 11, and a jump URL (Uniform Resource Locator) with detail product information of the BMS 11. The jump URL is also known as a web address.

The identification code comprises a vendor identification number, a product category number, and a product type number. The identification code further includes an IBeacon identification number and a transmission power identification number.

In one embodiment, a length of the vendor identification number is 16 bytes. A length of the product category number is 2 bytes. A length of the product type number is 2 bytes. A length of the IBeacon identification number is 9 bytes. A length of the transmission power identification number is 2 bytes. A length of the identification code is 32 bytes.

At block S2, setting the identification code in a beacon device 13.

In one embodiment, the beacon device 13 may be positioned on a main control box of the electric vehicle 10, or may be positioned on other locations of a main body of the electric vehicle 10. The beacon device 13 is with a function of BLE (Bluetooth Low Energy), which is the so-called Bluetooth 4.0 or Bluetooth Smart communication function. The beacon device 13 utilizes a BLE technology to transmit the identification code to the surrounding devices near the beacon device 13. That is, the beacon device 13 may be equal to a base station transmitting the identification code. The beacon device 13 is arranged near the BMS 11.

At block S3, broadcasting the identification code through a Bluetooth IBeacon technology by the beacon device 13.

It may be understood that, the IBeacon technology indicates a device with a BLE communication function which is capable of transmitting its unique identification code to surrounding devices. Application softwares of the surrounding devices will take corresponding actions, according to the identification code.

At block S4, activating a Bluetooth module 32 of a mobile communication device 30 and a shake function of an IM software 36 of the mobile communication device 30, when it is necessary to acquire the information of the BMS (11).

In one embodiment, the IM software 36 is Wechat software which similar to skype or facebook; the mobile communication device 30 comprises a cell phone, a laptop computer, a tablet computer, a personal digital assistant, and a smart wearable device.

At block S5, receiving the identification code by the IM software 36, and acquiring the information of the BMS 11 from the IM background server 20, according to the identification code.

At block S6, displaying the information of the BMS 11 on a page of the mobile communication device 30.

In one embodiment, the page is a H5 (HyperText Markup Language 5) page. In other embodiments, the page may be other pages, such as an ASP (Active Server Pages), a PHP (Hypertext Preprocessor) page, or the like.

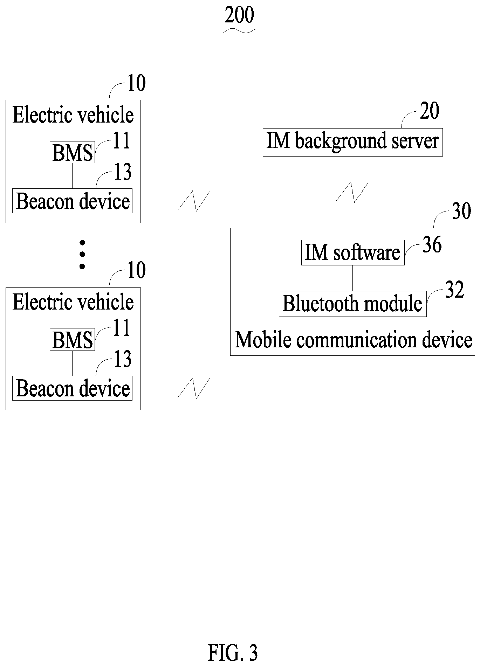

Fig. 3 illustrates a block schematic diagram of an information inquiry system 200 provided by another embodiment of the present invention. The information inquiry system 200 comprises a plurality of electric vehicles 10, an instant messaging (IM) background server (20), and a mobile communication device 30. Each electric vehicle 10 comprises a battery management system (BMS) 11 and a beacon device 13. The mobile communication device 30 comprises a Bluetooth module 32 and an IM software 36. In one embodiment, the IM software 36 is Wechat software which similar to skype or facebook. The IM background server 20 is configured to save information of each BMS 11 and an identification code of each BMS 11. The identification code of each BMS 11 is set in a corresponding beacon device 13. Each beacon device 13 is configured to broadcast the identification code of a corresponding BMS 11 through a Bluetooth IBeacon technology. The mobile communication device 30 is configured to activate the Bluetooth module 32 and the shake function of the IM software 36, when it is necessary to acquire the information of the BMS 11 of one of the electric vehicle 10. The IM software 36 is configured to receive the identification code of the BMS 11 of the one of the electric vehicle 10, and acquire the information of the BMS 11 of the one of the electric vehicle 10 from the IM background server 20, according to the identification code of the BMS 11 of the one of the electric vehicle 10. The information of the BMS 11 of the one of the electric vehicle 10 is displayed on a page of the mobile communication device 30.

It may be understood that, each BMS 11 is attached to a main control box which located at a lower portion of a vehicle body of each electric vehicle 10. Each BMS 11 is coupled to a battery pack (not shown) of each electric vehicle 10. Each battery pack comprises a plurality of rechargeable batteries (not shown) configured in series, parallel or a mixture of both to store and deliver electric energy. Each BMS 11 is configured to manage a corresponding battery pack, monitor states of the corresponding battery pack.

In one embodiment, each beacon device 13 is with a function of BLE (Bluetooth Low Energy), which is the so-called Bluetooth 4.0 or Bluetooth Smart communication function. Each beacon device 13 utilizes a BLE technology to transmit the identification code to the surrounding devices near each beacon device 13. That is, each beacon device 13 may be equal to a base station transmitting the identification code. Each beacon device 13 is arranged near a corresponding BMS 11. Each beacon device 13 may be attached to the main control box of the electric vehicle 10, or may be positioned on other locations of the vehicle body of the electric vehicle 10.

The information of each BMS 11 comprises a version of a corresponding BMS 11, a hardware information of the corresponding BMS 11, a product map of the corresponding BMS 11, and a jump URL (Uniform Resource Locator) with detail product information of the corresponding BMS 11. The jump URL is also known as a web address.

Each identification code comprises a vendor identification number, a product category number, and a product type number. The identification code further includes an IBeacon identification number and a transmission power identification number.

In one embodiment, a length of the vendor identification number is 16 bytes. A length of the product category number is 2 bytes. A length of the product type number is 2 bytes. A length of the IBeacon identification number is 9 bytes. A length of the transmission power identification number is 2 bytes. A length of the identification code is 32 bytes.

In one embodiment, the page is a H5 (HyperText Markup Language 5) page. In other embodiments, the page may be other pages, such as an ASP (Active Server Pages), a PHP (Hypertext Preprocessor) page, or the like.

In one embodiment, the mobile communication device 30 comprises a cell phone, a laptop computer, a tablet computer, a personal digital assistant, and a smart wearable device.

An operation principle of the information inquiry system 200 is similar to the operation principle of the information inquiry system 100, and it is not repeated here.

As detail above, the IM background server 20 is configured to save the information of the BMS 11 and the identification code of the BMS 11; the identification code is set in the beacon device 13; the beacon device 13 is configured to broadcast the identification code through the Bluetooth IBeacon technology; the Bluetooth module 32 and the shake function of the IM software 36 are activated, when it is necessary to acquire the information of the BMS 11; the IM software 36 receives the identification code and acquires the information of the BMS 11 from the IM background server 20, according to the identification code; and the information of the BMS 11 is displayed on the page of the mobile communication device 30. Therefore, it is convenient for the user to acquire the information of the BMS 11 through the mobile communication device 30, without detachment the main body of the electric vehicle 10 or opening the main control box of the electric vehicle 10 to connect the special device; and it can save manpower, costs and times.

It will be apparent to those skilled in the art that various modification and variations can be made in the multicolor illumination device and related method of the present invention without departing from the spirit or scope of the invention. Thus, it is intended that the present invention cover modifications and variations that come within the scope of the appended claims and their equivalents.

## Claims

1. An information inquiry system (100), comprising:
an electric vehicle (10) comprising:
a battery management system (BMS) (11); and
a beacon device (13) configured to save an identification code of the BMS (11) and broadcast the identification code through a Bluetooth IBeacon technology;
an instant messaging (IM) background server (20) configured to save information of the BMS (11) and the identification code of the BMS (11); and
a mobile communication device (30) comprising a Bluetooth module (32) and an IM software (36);
wherein when it is necessary to acquire the information of the BMS (11), the Bluetooth module (32) and a shake function of the IM software (36) are activated, the IM software (36) receives the identification code and acquires the information of the BMS (11) from the IM background server (20), according to the identification code, and the information of the BMS (11) is displayed on a page of the mobile communication device (30).

2. The information inquiry system (100) of claim 1, wherein the IM software (36) is wechat software; the information of the BMS (11) comprises a version of the BMS (11), a hardware message of the BMS (11), a product map of the BMS (11), and a jump webpage address with the detailed information of the BMS (11); and the identification code comprises a vendor identification number of the BMS (11), a category number of the BMS (11), and a type number of the BMS (11).

3. The information inquiry system (100) of claim 2, wherein a length of the vendor identification number is 16 bytes, a length of the category number is 2 bytes, and a length of a type number is 2 bytes; and the identification code further comprises an IBeacon identification number and a transmission power identification number.

4. The information inquiry system (100) of claim 3, wherein a length of the IBeacon identifier is 9 bytes, and a length of the transmit power identifier is 2 bytes.

5. The information inquiry system (100) of claim 1, wherein a length of the identification code is 32 bytes; and the page is a page of Hypertext Markup Language 5.

6. The information inquiry system (100) of claim 1, wherein the mobile communication device (30) comprises a mobile phone, a laptop computer, a tablet computer, a personal digital assistant and a smart wearable device.

7. An information inquiry method, comprising:
saving information of a battery management system (BMS) (11) and an identification code of the BMS (11) in an instant messaging (IM) background server (20);
setting the identification code in a beacon device (13);
broadcasting the identification code by the beacon device (13) through a Bluetooth IBeacon technology;
activating a bluetooth module (32) of a mobile communication device (30) and a shake function of an IM software (36) of the mobile communication device (30);
receiving the identification code by the IM software (36), and acquiring the information of the BMS (11) from the IM background server (20), according to the identification code; and
displaying the information of the BMS (11) on a page of the mobile communication device (30).

8. The information inquiry method of claim 7, wherein the IM software (36) is wechat software; the information of the BMS (11) comprises a version of the BMS (11), a hardware message of the BMS (11), a product map of the BMS (11), and a jump webpage address with the detailed information of the BMS (11); and the identification code comprises a vendor identification number of the BMS (11), a category number of the BMS (11), and a type number of the BMS (11).

9. The information inquiry method of claim 8, wherein a length of the vendor identification number is 16 bytes, a length of the category number is 2 bytes, and a length of a type number is 2 bytes; and the identification code further comprises an IBeacon identification number and a transmission power identification number.

10. The information inquiry method of claim 9, wherein a length of the IBeacon identifier is 9 bytes, and a length of the transmit power identifier is 2 bytes.

11. The information inquiry method of claim 7, wherein a length of the identification code is 32 bytes; and the page is a page of Hypertext Markup Language 5.

12. The information inquiry method of claim 7, wherein the mobile communication device (30) comprises a mobile phone, a laptop computer, a tablet computer, a personal digital assistant and a smart wearable device.

13. An information inquiry system (200), comprising:
a plurality of electric vehicles (10), each electric vehicle (10) comprising:
a battery management system (BMS) (11); and
a beacon device (13) configured to save an identification code of the BMS (11) and broadcast the identification code through a Bluetooth IBeacon technology;
an instant messaging (IM) background server (20) configured to save information of each BMS (11) and the identification code of each BMS (11); and
a mobile communication device (30) comprising a Bluetooth module (32) and an IM software (36);
wherein when it is necessary to acquire the information of the BMS (11) of one of the electric vehicle (10), the Bluetooth module (32) and a shake function of the IM software (36) are activated, the IM software (36) receives the identification code of the BMS (11) of the one of the electric vehicle (10) and acquires the information of the BMS (11) of the one of the electric vehicle (10) from the IM background server (20), according to the identification code the BMS (11) of the one of the electric vehicle (10), and the information of the BMS (11) of the one of the electric vehicle (10) is displayed on a page of the mobile communication device (30).

14. The information inquiry system (200) of claim 13, wherein the IM software (36) is wechat software; and the information of each BMS (11) comprises a version of a corresponding BMS (11), a hardware message of the corresponding BMS (11), a product map of the corresponding BMS (11), and a jump webpage address with the detailed information of the corresponding BMS (11).
